# EUROPEAN PATENT APPLICATION

(11) **EP 2 213 561 A1**
(43) Date of publication of application: **04.08.2010**
(21) Application number: 09001332.7
(22) Date of filing: 30.01.2009
(51) Int. Cl.: B62K 5/04, B62D 9/02

(54) **Front suspension and steering system for cycles**

(71) Applicant: Wang, Li Yang, Loo Chu Village Tau Yuan County (TW)
(72) Inventor: Wang, Li Yang, Loo Chu Village Tau Yuan County (TW)
(74) Representative: TER MEER - STEINMEISTER & PARTNER GbR

(57) **Abstract**

The present invention offers a front suspension and steering system for cycles and motorcycles. A mainframe (116) with two front wheels (102,104) and one rear wheel (108), the front wheels (102,104) have flat surface tires, a 2-axial hub, having a wheel axle (110) to support the two front wheels (102,104) and a tilting axis (204) below the wheel axle (110), a steering arm, having a tilting axle, the tilting axle can rotate in the tilting axis (204) when the steering arm is tilting, the steering arm is connected to the mainframe by two wish bones (118) and can rotate in the steering axis. During turning, the body and the rear wheel (108) are tilting to the side of turning to keep the center of gravity on the side of turning to balance the centrifugal force, but the front wheels (102,104) and the 2-axial hub do not tilt, such that it is more stable and safe during turning.

## Description

### BACKGROUND OF THE INVENTION

### Field of the invention

The present invention relates to a front suspension and steering system. In particular, the present invention relates to a front suspension and steering system for cycles and motorcycles without tilting of the front wheel during turning.

### Description of the Related Art

Three wheel cycles or motorcycles have been proposed with both one- wheel steering and with front two-wheel steering of varied construction, which however do not permit the production to drive safely when it is turning nor emergency stop. Indeed, the general problems related to three wheel cycles or motorcycles may be in the lack of automobile stability during turning to the left or to the right side, the front wheel always tilt so that the tire surface is contact to the ground with its edge, thus decreasing the frictional force between the tires and the ground and resulting slip outwardly.

U.S. Pat. NO. 4,375,293 to Solbes disclosed a suspension and steering system, during turning. Both the tires are tilt and the frictional force between the tires and the ground are restricted and resulting slip outwardly.

U.S. Pat. NO. 5,116,069 to Miller et al disclosed a three-wheel vehicle has one front wheel and two rear wheels to improve safety of operation, and the front wheel is also tilted.

U.S. Pat. NO. 6,435,522 to Van Den Brink et al disclosed a vehicle provided with a frame having two frame sections which are able to tilt with respect to one another. The front wheel is also tilted.

Therefore, there is a need to develop a cycles and motorcycles to overcome the shortcomings of the prior arts. The present invention provides a front suspension and steering system for cycles and motorcycles without tilting of the front wheel during turning.

### OBJECTS OF THE INVENTION

It is therefore an object of the invention to provide a front suspension and steering system for cycles and motorcycles to use two flat surface tires for the front wheels to increase the contact area and frictional force of the tires with the ground, such that it is more stable and safe during breaking and turning.

It is another object of the invention to provide a front suspension and steering system for cycles and motorcycles to use a 2-axial hub, a tilting axle, a steering axle and a steering arm as the steering device such that the front wheels will not tilt during turning.

It is yet another object of the invention to provide a front suspension and steering system for cycles and motorcycles to use a 2-axial hub, a tilting axle, a steering axle and a steering arm as the steering device to simplifier the steering system and reduce the cost of the system.

### DISCLOSURE OF THE INVENTION

A first aspect of the present invention teaches a front suspension and steering system for cycles and motorcycles, with two flat surface tires for the front wheels, the steering device of the front wheel including a 2-axial hub, a tilting axle, a steering axle and a steering arm such that the front wheel will not tilt during turning, consists the following: A mainframe with two front wheels and one rear wheel, the front wheels have flat surface tires; A 2-axial hub, having a wheel axle to support the two front wheels and a tilting axis below the wheel axle, the tilting axis is longitudinal and perpendicular to the wheel axle; A steering arm, the steering arm is in L shape, having a tilting axle, the tilting axle can rotate in the tilting axis when the steering arm is tilting, the steering arm is connected to the mainframe by two wish bones; A steering axle, the steering axle can rotate in a steering axis when the steering arm is turning.

Another preferred embodiment of the present invention teaches a front suspension and steering system for cycles and motorcycles, the steering arm is in rotated 180°L shape, and the steering axle is between the wish bones, the steering axle can rotate in the steering axis on the mainframe when turning.

Another preferred embodiment of the present invention teaches a front suspension and steering system for cycles and motorcycles, the steering arm is in reversed Y shape, and the tilting axle is between the tips of the steering arm.

### BRIEF DESCRIPTION OF THE DRAWINGS

The foregoing and other advantages of the invention will be more fully understood with reference to the description of the best embodiment and the drawing wherein:
FIG. 1 is a perspective view showing a motorcycles turning to the left according to an embodiment of the present invention.
FIG. 2 is the front view, side view and cross sectional view of a front wheel system.
FIG. 2(A) is the front view of the front wheel system.
FIG. 2(B) is the side view of the front wheel system.
FIG. 2(C) is the cross-sectional view through the line A-A of FIG. 2(B) of the front wheel system.
FIG. 3 is the front view and cross sectional view showing a motorcycle using a 2-axial hub and an L shape steering arm as the steering device according to an embodiment of the present invention.
FIG. 3 (A) is the front view.
FIG. 3 (B) is a cross-sectional view through the line A-A of FIG. 3(A).
FIG. 4 is a schematic representation of the motorcycle of FIG. 3 when it is turning to the left.
FIG. 5 is the front view and cross sectional view showing a motorcycle using a 2-axial hub and a rotated 180°L shape steering arm as the steering device according to an embodiment of the present invention.
FIG. 5 (A) is the front view.
FIG. 5 (B) is a cross-sectional view through the line A-A of FIG. 5(A).
FIG. 6 is a schematic representation of the motorcycle of FIG. 5 when it is turning to the left.
FIG. 7 is a schematic representation of a motorcycle using a 2-axial hub and a steering arm as the steering device but the steering arm is in reversed Y shape according to another embodiment of the present invention.

### DESCRIPTION OF THE PREFERRED EMBODIMENTS

The foregoing and other advantages of the invention will be more fully understood with reference to the description of the best embodiment and the drawing as the following description.

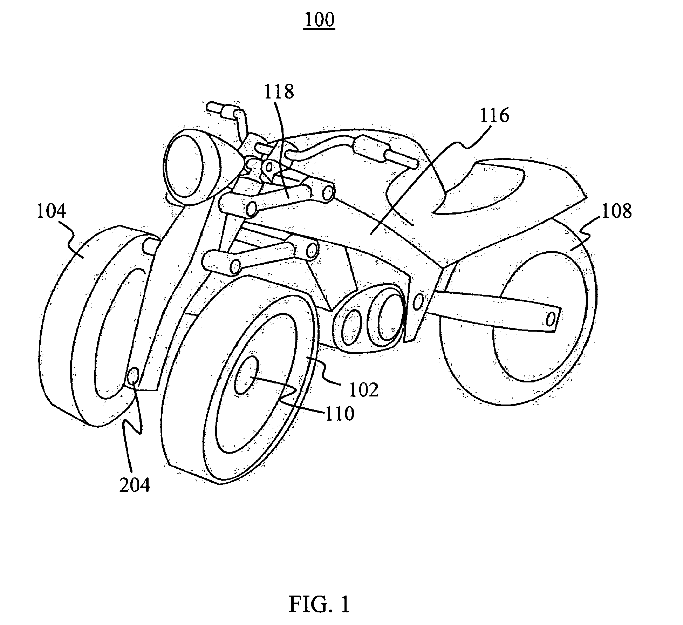

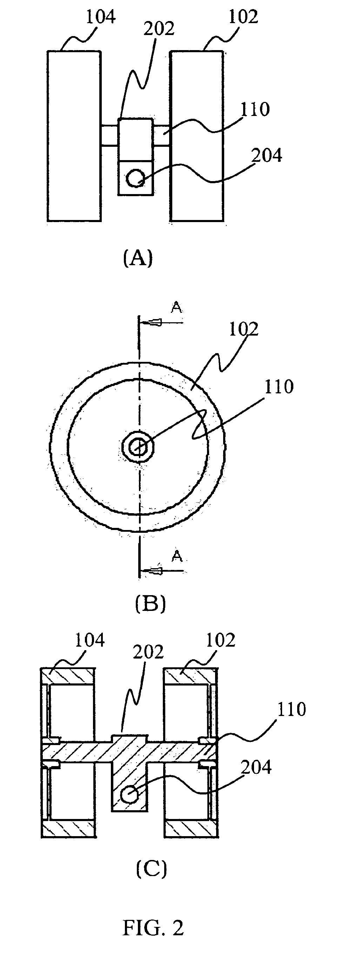

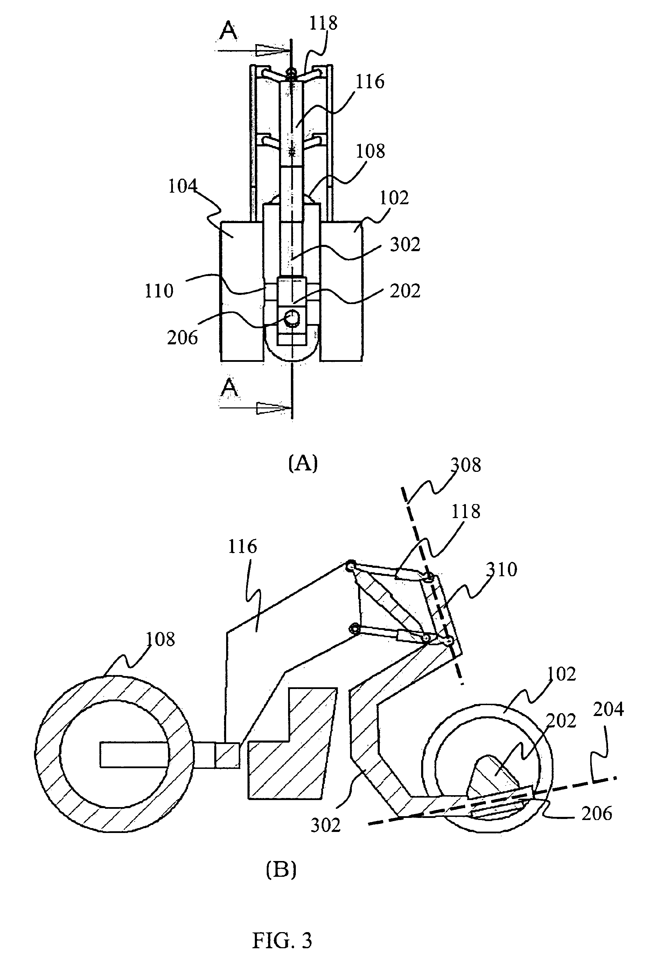

Refer to FIG. 1, FIG. 1 is a perspective view showing a motorcycle turning to the left according to an embodiment of the present invention. A motorcycle **100** with front wheels **102** and **104** which is sustained by a wheel axis **110** which is fixed to a 2-axial hub **202** (see FIG. 2), a steering arm **302** (see FIG. 3) is connected to the mainframe **116** by a pair of wish bones **118,** and a rear wheel **108.** Note that the front wheels **102** and **104** both have a flat surface, the contact area of the tires with the ground is increased and the frictional force of the tires with the ground is also increased, such that it is more stable and safe during breaking and turning. The function is provided by a 2-axial hub **202** as described bellow.

Refer to FIG. 2. FIG. 2 is the front view, side view and cross sectional view of a front wheel system. FIG. 2(A) is the front view of the front wheel system. Front wheels **102** and **104** both have a flat surface, and are supported by a wheel axle **110** of the 2-axial hub **202,** below the wheel axle **110** of the 2-axial hub **106,** there is a tilting axis **204,** which is longitudinal and perpendicular to the wheel axle **110.** FIG. 2(B) is the side view of the front wheel system. We can see the front wheel **102** and the wheel axle **110.** FIG. 2(C) is the cross-sectional view through the line A-A of FIG. 2(B) of the front wheel system. We can see the front wheels **102** and **104,** the 2-axial hub **202,** the wheel axle **110** is fixed on the 2-axial hub **202,** below the wheel axle **110** there is a tilting axis **204.**

Refer to FIG. 3. FIG. 3 is the front view and cross sectional view showing a motorcycle using a 2-axial hub, a steering arm as the steering device according to an embodiment of the present invention. FIG. 3 (A) is the front view. We can see the motorcycle has flat surface front wheels **102** and **104** sustained by a wheel axle **110** which is fixed to a 2-axial hub **202.** A rear wheel **108** is a traditional wheel with curved surface. FIG. 3 (B) is a cross-sectional view through the line A-A of FIG. 3 (A). The cross section goes through the rear wheel **108,** the 2-axial hub **202,** the tilting axle **206** and the steering axis **308.** The tilting axle **206** is on the lower end of the steering arm **302** and the tilting axle **206** can rotate in the tilting axis **204** when the steering arm **302** is tilting, the steering arm **302** is connected to the mainframe **116** by a pair of wish bones **118.** The steering axle **310** is on the upper end of the steering arm **302,** and can rotate in the steering axis **308** on the mainframe **116** when turning. Outside the cross section, there also shows the front wheel **102** and the traditional wish bones **118.**

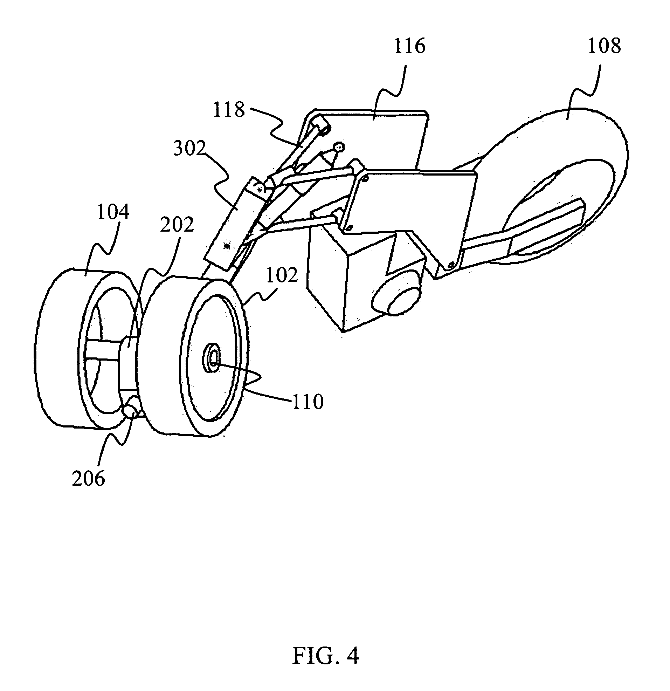

Refer to FIG. 4. FIG. 4 is a schematic representation of the motorcycle of FIG. 3 when it is turning to the left. When the motorcycle is turning to the left, as the steering arm **302** is turned to the left, the body and the rear wheel **108** are tilt to the left to keep the center of gravity on the left side to balance the centrifugal force, but the front wheels **102** and **104** and the 2-axial hub **202** are not tilt since the tilting axle **206** on the lower end of the steering arm **302** rotates in the tilting axis **204** when the steering arm **302** is turned to the left. The flat surface tires still contact with the ground and then increase the contact area and frictional force of the tires with the ground, such that it is more stable and safe during turning. The flat tire is also more stable and safe during braking, especially in emergency braking, since the braking distance will decrease with a flat tire surface.

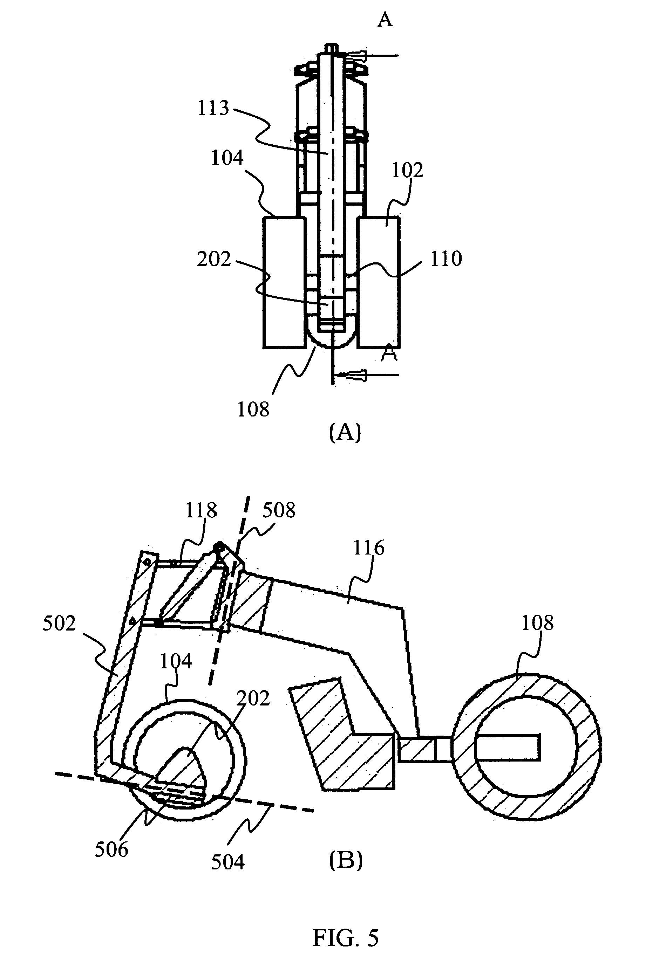

Refer to FIG. 5. FIG. 5 is the front view and cross sectional view showing a motorcycle using a 2-axial hub and a rotated 180°L shape steering arm as the steering device according to an embodiment of the present invention. FIG. 5 (A) is the front view. We can see the motorcycle has flat surface front wheels **102** and **104** sustained by a wheel axle **110** which is fixed to a 2-axial hub **202.** A rear wheel **108** is a traditional wheel with curved surface. FIG. 5 (B) is a cross-sectional view through the line A-A of FIG. 5 (A). The cross section goes through the rear wheel **108,** the 2-axial hub **202,** the tilting axle **506** is the same as that of FIG. 3(B), but the steering axis **508** is different from that of FIG. 3(B) and is on the mainframe **116.** The steering arm **502** is in rotated 180°L shape, the tilting axle **506** is on the lower end of the steering arm **502,** and the tilting axle **506** can rotate in the tilting axis **504** when the steering arm **502** is tilting, the steering arm **502** is connected to the mainframe **116** by a pair of wish bones **118.** The steering axle (not shown) is between the wish bones near the side of the mainframe, and can rotate in the steering axis **508** on the mainframe **116** when turning. Outside the cross section, there also shows the front wheel **104** and the traditional wish bones **118.**

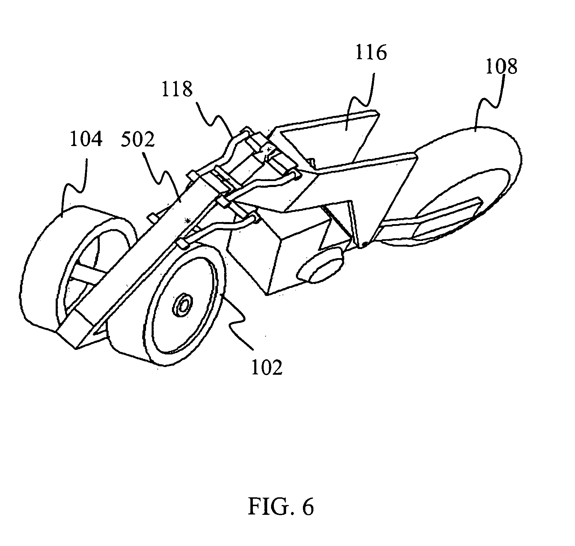

Refer to FIG. 6. FIG. 6 is a schematic representation of the motorcycle of FIG. 5 when it is turning to the left. When the motorcycle is turning to the left, as the steering arm **502** is turned to the left, the body and the rear wheel **108** are tilted to the left to keep the center of gravity on the left side to balance the centrifugal force, but the front wheels **102** and **104** and the 2-axial hub **202** are not tilt since the tilting axle **506** on the lower end of the steering arm **502** rotates in the tilting axis **504** when the steering arm **502** is turned to the left. The flat surface tires still contact with the ground and then increase the contact area and frictional force of the tires with the ground, such that it is more stable and safe during turning. The flat tire is also more stable and safe during braking, especially in emergency braking, since the braking distance will decrease with a flat tire surface.

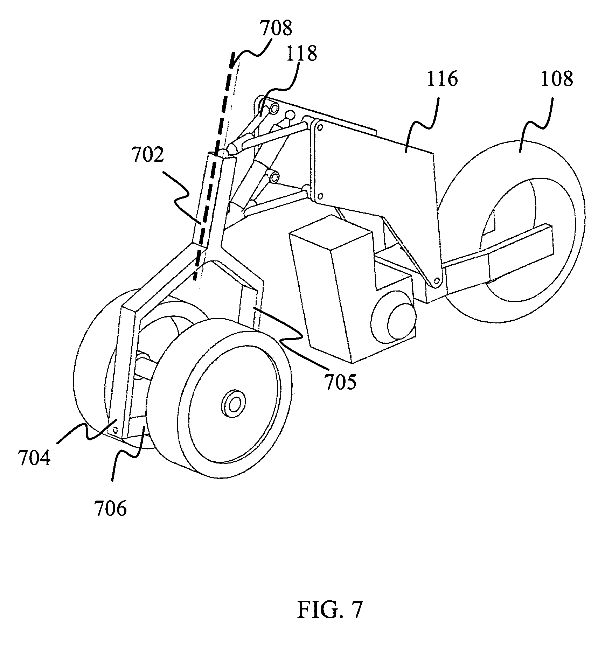

Another preferred embodiment is shown in FIG. 7. FIG. 7 is a schematic representation of a motorcycle using a 2-axial hub and a steering arm as the steering device but the steering arm is in reversed Y shape according to another embodiment of the present invention. The steering arm **702** has a front arm **704** and a rear arm **705.** The steering arm **702** is in reversed Y shape, and the tilting axle **706** is between the lower ends of the front arm **704** and the rear arm **705.** The steering axle is also on the upper end of the steering arm **702,** and can rotate in the steering axis **708** on the mainframe **116** when turning, the steering arm **702** is connected to the mainframe **116** by a pair of wish bones **118.** This structure results more stable and uniform driving force applied to the tiling axle **706.**

Although specific embodiments of the invention have been disclosed, it will be understood by those having skill in the art that minor changes can be made to the form and details of the specific embodiments disclosed herein, without departing from the scope of the invention. The embodiments presented above are for purposes of example only and are not to be taken to limit the scope of the appended claims.

## Claims

1. A front suspension and steering system for cycles and motorcycles, with two flat surface tires for the front wheels, the steering device of the front wheel including a 2-axial hub, a tilting axle, a steering axle and a steering arm such that the front wheel will not tilt during turning, comprising:
a mainframe with two front wheels and one rear wheel, said front wheels have flat surface tires;
a 2-axial hub, having a wheel axle to support the two front wheels and a tilting axis below said wheel axle, said tilting axis is longitudinal and perpendicular to said wheel axle;
a steering arm, having a tilting axle, said tilting axle can rotate in said tilting axis when said steering arm is tilting, said steering arm is connected to said mainframe by two wish bones;
a steering axle, said steering axle can rotate in a steering axis when said steering arm is turning.

2. A front suspension and steering system as recited in claim 1, wherein said steering arm is in L shape, said tilting axle is on the lower end of said steering arm.

3. A front suspension and steering system as recited in claim 2, wherein said steering axle is on the upper end of said steering arm, and can rotate in said steering axis on said mainframe when turning.

4. A front suspension and steering system as recited in claim 1, wherein said steering arm is in rotated 180°L shape, said tilting axle is on the lower end of said steering arm.

5. A front suspension and steering system as recited in claim 4, wherein said steering axle is between said wish bones near the side of said mainframe, said steering axle can rotate in said steering axis on said mainframe when turning.

6. A front suspension and steering system as recited in claim 1, wherein said steering arm is in reversed Y shape, said tilting axle is between the lower ends of said steering arm.

7. A front suspension and steering system as recited in claim 6, wherein said steering axle is on the upper end of said steering arm, and can rotate in said steering axis on said mainframe when turning.
